# EUROPÄISCHE PATENTSCHRIFT

(11) **EP 1 144 224 B1**
(45) Veröffentlichungstag und Bekanntmachung des Hinweises auf die Patenterteilung: **21.04.2004**
(21) Anmeldenummer: 99955929.7
(22) Anmeldetag: 30.10.1999
(51) Int. Cl.: B60R 16/02

(54) **BATTERIEBORDNETZ MIT SICHERHEITSABSCHALTUNG**
ELECTRICAL SYSTEM WITH BATTERY AND SECURITY DISCONNECTION
RESEAU DE BORD A BATTERIE, AVEC COUPE-CIRCUIT DE SECURITE

(30) Priorität: 27.11.1998 DE 19854953
(43) Veröffentlichungstag der Anmeldung: 17.10.2001
(73) Patentinhaber: Volkswagen Aktiengesellschaft, 38436 Wolfsburg (DE)
(72) Erfinder: LEHNST, Thomas, D-38104 Braunschweig (DE); MÜLLER, Uwe, D-38550 Isenbüttel (DE); MARTEN, Thomas, D-38446 Wolfsburg (DE); DIERKER, Uwe, D-38550 Isenbüttel (DE)
(74) Vertreter: Effert, Bressel und Kollegen
(86) Internationale Anmeldenummer: PCT/EP1999/008300
(87) Internationale Veröffentlichungsnummer: WO 2000/032443

(56) Entgegenhaltungen:
- EP-A- 0 632 558
- WO-A-94/23970

## Beschreibung

Die Erfindung betrifft ein Bordnetz für Fahrzeuge, insbesondere Fahrzeuge mit Verbrennungsmotor, mit einem Generator, einem insbesondere manuell betätigbaren Starter, einer Starterbatterie und einem im die Starterbatterie und den Starter enthaltenden Starterkreis angeordneten, von einem Crash-Sensor gesteuerten Unterbrechungselement.

Bordnetze für Fahrzeuge müssen unter anderem darauf ausgelegt sein, daß im Crashfall durch elektrische Kurzschlüsse verursachte Leitungsbrände vermieden werden. Zu diesem Zweck sind alle Leitungen üblicherweise mit Sicherungen gegen Kurzschlüsse geschützt mit Ausnahme der sog. Starterleiter, d. h. der Verbindung zwischen dem Pluspol der Batterie und dem übergeordneten Sicherungselement. Für diese Leitung gibt es wegen des hohen Starterstromes keine geeignete Sicherung.

Eine Vorrichtung der eingangs genannten Art ist aus der EP 0 825 068 bekannt. Hierzu ist in der Starterleitung des Fahrzeuges ein mit einem Crash-Sensor zusammenwirkendes Unterbrechungselement für den Stromfluß im Kraftfahrzeug angeordnet, welches im Falle eines Crashs die Starterbatteriezuleitung sofort unterbricht. Dabei ist das Unterbrechungselement in der Art eines Zündsatzes aufgebaut, welcher explosionsartig die Hauptstrombahn trennt. Die DE 196 06 448 bzw. die DE 44 02 994 zeigen in Form einer Batteriekabelklemme den konstruktiven Aufbau eines solchen Unterbrechungselementes, welches in der Regel mit Hilfe einer pyrotechnischen Sprengkapsel im Zusammenhang mit einem Airbagsensor betrieben wird. Dazu weist das Unterbrechungselement zwei Kontaktteile auf, deren Kontaktflächen im Normalfall aufeinander liegen und die bei einer anomal großen Beschleunigung des Kraftfahrzeugs voneinander mit pyrotechnischen Mitteln, insbesondere in Form einer Treibladung, voneinander trennbar sind. Nach der DE 44 25 307 kann die Treibladung mit der Batteriekabelklemme eine Baueinheit bilden.

All den zuvor beschriebenen Lösungen ist gemein, daß im Falle eines Ansprechens des Crash-Sensors die Verbindungsleitung zwischen der Starterbatterie und dem in der Hierarchie übergeordneten Sicherungselement dauerhaft unterbrochen ist. Dies führt dazu, daß das Fahrzeug nach Auslösen des Crash-Sensors nicht mehr gestartet werden kann. Dies wirkt sich insbesondere dann nachteilig aus, wenn das Auslösen des Airbag-Sensors auf eine Fehlfunktion oder aber auf einen nur geringfügigen Unfall zurückzuführen ist und der Fahrer das Fahrzeug mindestens noch bis in die Werkstatt überführen möchte. In einem solchen Fall ist aber eine Bewegung des Fahrzeugs aus eigenen Mitteln nicht mehr möglich.

Aus der DE 40 28 242 ist ein Bordnetz für Kraftfahrzeuge bekannt, welches neben einer Starterbatterie auch eine Bordnetzbatterie zur Versorgung von Bordnetzverbrauchern aufweist. Die beiden Batterien sind dann miteinander verbunden, wenn die Batteriespannung der Bordnetzbatterie größer als die der Starterbatterie ist. Im umgekehrten Fall, wenn die Spannung der Bordnetzbatterie gegenüber derjenigen der Starterbatterie abgesunken ist, werden die beiden Batterien voneinander getrennt. Andererseits kann der Generator in seinem Betrieb dann wieder beide Batterien aufladen. Bei dieser Lösung sind Bordnetzbatterie und Starterbatterie ständig parallel zueinander geschaltet und nur die Starterbatterie ist über einen Starterbatterieschalter im Starterkreis von einem Steuergerät abschaltbar.

Eine Schaltungsanordnung zum Bezwecken einer entsprechenden im Zusammenhang mit der zuvor genannten Druckschrift beschriebenen Funktion ist aus der DE 38 41 769 bekannt. Aus der WO 96/33078 ist eine Batterieklemme bekannt, die mit einem Schalter in der Batteriezuleitung zusammenwirkt, welcher über Überwachungsmittel verfügt, um den Schalter in Abhängigkeit von den an seinen Überwachungseingängen erhaltenen Signalen zu steuern.

Der Erfindung liegt die Aufgabe zugrunde, bei einem Bordnetz für Fahrzeuge der eingangs genannten Art ein Wiederanlassen des Fahrzeuges nach dem Ansprechen des Crash-Sensors und damit verbundener irreversibler Unterbrechung des Starterkreises ein Wiederanlassen des Fahrzeuges zu ermöglichen.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Diese Aufgabe wird erfindungsgemäß dadurch gelöst, daß ein elektrisches Verbindungsmittel vorgesehen ist, welches von einer den Starterkreis auf einen Kurzschluß hin überwachenden Detektoreinrichtung derart ansteuerbar ist, daß nach einer Unterbrechung des Starterkreises infolge eines Ansprechens des Unterbrechungselementes über das Verbindungsmittel im Falle der Kurzschlußfreiheit des Starterkreises eine elektrische Verbindung des Starters zu einer Batterie im Bordnetz herstellbar ist.

Die Erfindung zeichnet sich im Kern dadurch aus, daß über das Verbindungsmittel eine Bypass-Leitung zur Versorgung des Starters aufgebaut wird, wenn über das Detektormittel festgestellt wird, daß die Starterleitung kurzschlußfrei ist. Damit kann der Motor dann wieder neu gestartet werden, wenn die mechanischen Zerstörungen durch den Crash nicht so groß waren, daß die zur Ausbildung des durch den Bypass-Kreis komplettierten Starterstromkreises erforderlichen Elemente zerstört wurden. Die dabei zur Versorgung des Starters dienende Energiequelle kann jede beliebige im Bereich des Bordnetzes verfügbare Batterie sein. Die erfindungsgemäße Lösung ist unabhängig von der Lage des Unterbrechungselementes, welches z. B. auch in der Massezuleitung der Starterbatterie angeordnet sein kann.

Bevorzugt sieht die Erfindung vor, daß das Verbindungsmittel parallel zum Unterbrechungselement angeordnet ist, wobei das Verbindungsmittel eine elektrische Verbindung des Starters zur Starterbatterie wiederherstellt. Hierbei kann die Starterbatterie selbst (wenn sie nicht zerstört ist) als Quelle für den Neustart des Fahrzeuges nach dem Crash verwendet werden. Hierdurch wird einerseits die sicherheitsrelevante Funktion des Unterbrechungsmittels infolge des Ansprechens des Crash-Sensors erhalten, so daß Leitungsbrände im Crashfall vermieden werden, andererseits aber das Abschleppen des Fahrzeuges, welches an sich fahrbereit ist, vermieden wird. Die Elektronik des Detektormittels untersucht zu diesem Zwecke die Starterleitung auf Kurzschluß und steuert das Verbindungsmittel an, wenn dort kein Kurzschluß vorhanden ist.

In einer alternativen Ausgestaltung der Erfindung für solche Bordnetze, die über eine zusätzliche Bordnetzbatterie verfügen, ist bevorzugt vorgesehen, daß das Verbindungsmittel im Falle einer irreversiblen Unterbrechung des Starterkreises infolge des Ansprechens des Unterbrechungselementes die elektrische Verbindung zwischen Starter und Bordnetzbatterie herstellt. Hierbei wird als Energiequelle für den Starter die Bordnetzbatterie verwendet, die in der Regel bei einem Front-Crash unbeschädigt bleibt, da sie im hinteren Bereich des Fahrzeugs untergebracht ist. Bei dieser Lösung kann der bereits bei Fahrzeugen mit zwei Batterien vorhandene Umschalter gleichzeitig mit der beschriebenen Verbindungsmittelfunktion versehen werden, wenn er ein entsprechendes Detektormittel aufweist, um die Starterleitung auf Kurzschlüsse hin zu untersuchen.

Weitere bevorzugte Ausführungsformen gehen aus den nachfolgenden Unteransprüchen hervor.

Die Erfindung wird im folgenden anhand von zwei Ausführungsbeispielen, die in den Zeichnungen dargestellt sind, näher erläutert.

Dabei zeigen
- Figur 1: ein erstes Ausführungsbeispiel der Erfindung
- Figur 2: ein zweites Ausführungsbeispiel der Erfindung

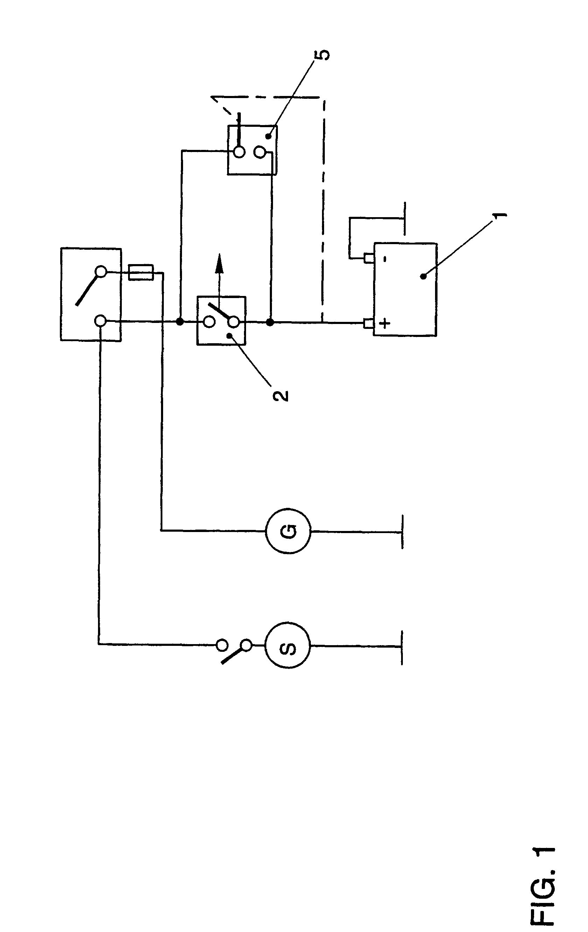

Nach dem in Fig. 1 dargestellten ersten Ausführungsbeispiel der Erfindung besteht das Bordnetz für Kraftfahrzeuge mit Verbrennungsmotor aus einer Starterbatterie 1, deren Minuspotential direkt mit dem Gehäuse (Chassis) verbunden ist. Von der Pluspolklemme der Batterie 1 ausgehend ist ein Starterkreis zur Versorgung eines Starters S ausgebildet, der ein Unterbrechungselement 2 enthält, welches mit einem Crash-Sensor gekoppelt ist, der im Crashfall die Unterbrechung des Unterbrechungsmittels 2 und damit des Starterkreises bewirkt.

Die Starterleitung verläuft über einen weiteren Schalter zu dem insbesondere manuell betätigbaren Zündschloßschalter (Klemme 50) des Starters S. Im Normalfall erhält der Starter S beim Schließen der Klemme 50 seine Versorgungsenergie bei geschlossenem Unterbrechungsmittel 2 von der Starterbatterie 1.

Darüber hinaus verfügt das Bordnetz über einen Generator G, welcher über ein Sicherungselement auf den weiteren Schalter geführt ist, so daß im Normalbetrieb (nicht gezeigt) des Fahrzeuges bei wieder geöffnetem Zündschloßschalter (Klemme 50) die Starterbatterie 1 über den Generator G geladen wird.

Parallel zum Unterbrechungsmittel 2 ist ein Verbindungsmittel 5 in Form eines Leistungsschalters angeordnet, welcher eine Detektoreinrichtung zur Überprüfung der Starterleitung auf Kurzschlüsse aufweist. Hierzu ist der Steuereingang des Leistungsschalters 5 mit der Verbindungsleitung zwischen Plusklemme der Batterie 1 und dem Unterbrechungsmittel 2 verbunden.

Im Falle eines Crashs öffnet das Unterbrechungsmittel 2 und schaltet die Starterbatterie 1 irreversibel vom übrigen Bordnetz ab, so daß eine Leitungsbrandgefahr herabgesetzt wird.

Soll nun nach erfolgtem Crash das Fahrzeug, welches noch betriebsbereit ist, wiedergestartet werden, stellt das Detektormittel des Verbindungsmittels 5 zunächst fest, ob die Starterleitung kurzschlußfrei ist. Wenn dies der Fall ist, schließt der Schalter des Verbindungsmittels 5 und der Strom der Starterbatterie 1 kann von der Plusklemme über das Verbindungsmittel 5 zum Starter S fließen. Dadurch kann das Fahrzeug zumindest noch bis zur Werkstatt fahren, um die crashbedingten Schäden zu beheben, ohne daß ein Abschleppen erforderlich wäre.

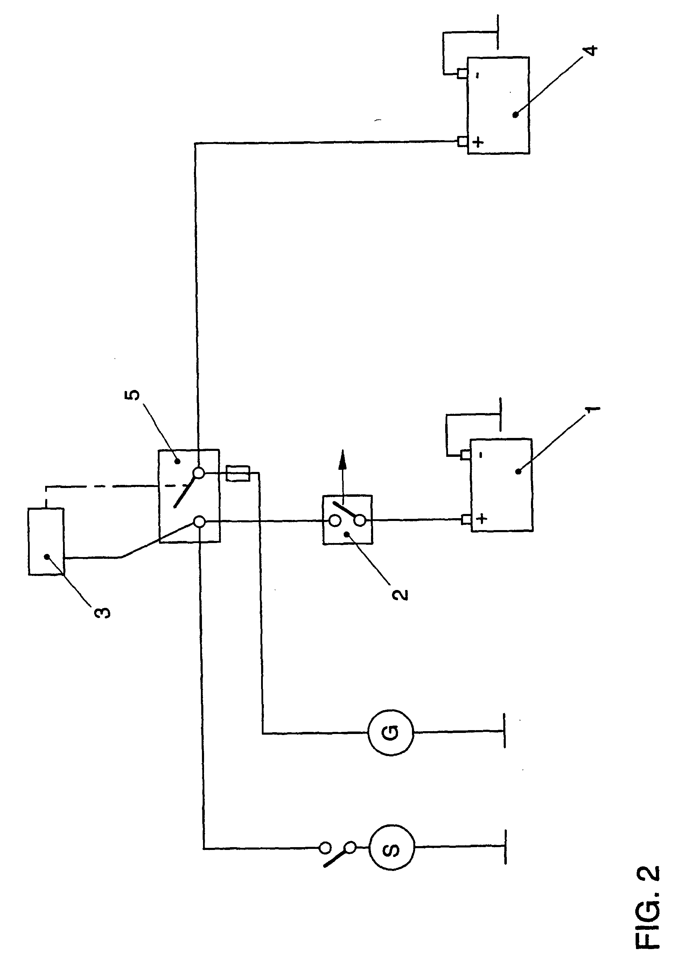

Das in Fig. 2 dargestellte zweite Ausführungsbeispiel der Erfindung unterscheidet sich von dem ersten Ausführungsbeispiel dadurch, daß neben der Starterbatterie 1 eine weitere Batterie 4 vorgesehen ist, die als Bordnetzbatterie 4 zur Versorgung von nicht dargestellten Komponenten eines Bordnetzes dient.

In diesem Fall ist das als Leistungsschalter ausgeführte Verbindungsmittel 5 zwischen Bordnetzbatterie 4 und Starterbatterie 1 geschaltet derart, daß bei einem erfolgten Crash und irreversiblem Öffnen des Unterbrechungsmittels 2 der Leistungsschalter 5 geschlossen wird, wenn seine ihm zugeordnete Detektoreinrichtung 3 Kurzschlußfreiheit im Starterkreis feststellt. Dann dient die Bordnetzbatterie 4 zur Versorgung des Starters S beim erneuten Anlaßvorgang.

Darüber hinaus ist in der Verbindungsleitung zwischen der Bordnetzbatterie 4 und dem Leistungsschalter 5 eine weitere (nicht dargestellte) Detektoreinrichtung vorgesehen, die diese Leitung auf Kurzschlußfreiheit hin überprüft. Die weitere Detektoreinrichtung wirkt mit dem Leistungsschalter 5 zusammen, indem nur dann sein Schließen zugelassen wird, wenn auch die Bordnetz- Verbindungsleitung zwischen Bordnetzbatterie 4 und Leistungsschalter 5 kurzschlußfrei ist.

## Patentansprüche

1. Bordnetz für Fahrzeuge, mit einem Generator (G), einem Starter (S), einer Starterbatterie (1) und einem in einem die Starterbatterie (1) und den Starter (S) enthaltenden Sttromkreis angeordneten, von einem Crash-Sensor gesteuerten Unterbrechungselement (2), mittels dessen die Stromverbindung irreversibel unterbrechbar ist,
**dadurch gekennzeichnet, daß**
ein elektrisches Verbindungsmittel (5) vorgesehen ist, welches von einer den Starterkreis auf einen Kurzschluß hin überwachenden Detektoreinrichtung (3) derart ansteuerbar ist, daß nach einer Unterbrechung des Starterkreises infolge eines Ansprechens des Unterbrechungselementes (2) über das Verbindungsmittel (5) im Falle der Kurzschlußfreiheit des Starterkreises eine elektrische Verbindung des Starters (S) zu einer Batterie im Bordnetz herstellbar ist.

2. Bordnetz nach Anspruch 1,
**dadurch gekennzeichnet, daß**
das Verbindungsmittel (5) parallel zum Unterbrechungselement (2) angeordnet ist, wobei das Verbindungsmittel die elektrische Verbindung des Starters (S) zur Starterbatterie (1) wiederherstellt.

3. Bordnetz für Fahrzeuge nach Anspruch 1, bei dem zusätzlich eine Bordnetzbatterie (4) zur Versorgung von Bordnetzverbrauchem vorgesehen ist, die parallel zur Starterbatterie (1) zuschaltbar ist,
**dadurch gekennzeichnet, daß**
das Verbindungsmittel (5) im Falle einer Unterbrechung des Starterkreises infolge des Ansprechens des Unterbrechungselementes (2) die elektrische Verbindung zwischen Starter (S) und Bordnetzbatterie (4) herstellt.

4. Bordnetz für Fahrzeuge nach Anspruch 1,
**dadurch gekennzeichnet, daß**
das Verbindungsmittel ein Leistungsschalter (5) ist.

5. Bordnetz für Fahrzeuge nach Anspruch 1,
**dadurch gekennzeichnet, daß**
der Leistungsschalter integriert mit dem Unterbrechungselement (2) an der Starterbatterie (1) angeordnet ist.

6. Bordnetz nach einem der vorhergehenden Ansprüche,
**dadurch gekennzeichnet, daß**
das Unterbrechungselement (2) in der Masseleitung der Starterbatterie (1) angeordnet ist.

7. Bordnetz für Fahrzeuge nach Anspruch 3,
**dadurch gekennzeichnet, daß**
in der Bordnetz-Verbindungsleitung zwischen Bordnetzbatterie (4) und Verbindungsmittel (5) eine weitere mit dem Verbindungsmittel (5) zusammenwirkende Detektoreinrichtung zur Überwachung der Bordnetz-Verbindungsleitung auf einen Kurzschluß hin vorgesehen ist.

8. Verwendung einer Vorrichtung nach einem der vorgenannten Ansprüche als Notspannungsversorgung für den Starter (S) nach Ansprechen des Crash-Sensors.

## Claims

1. On-board vehicle electrical system, having a generator (G), a starter (S), a starter battery (1) and a circuit breaker element (2) which is arranged in a circuit containing the starter battery (1) and the starter (S), and is controlled by a crash sensor, by means of which circuit breaker element (2) the power connection can be disconnected in an irreversible fashion, **characterized in that** an electrical connecting means (5) is provided which can be actuated by a detector device (3) which monitors the starter circuit for a short-circuit in such a way that after the starter circuit is disconnected owing to the circuit breaker element (2) responding, an electrical connection between the starter (S) and a battery in the on-board electrical system can be brought about using the connecting means (5) if the starter circuit is free of short-circuits.

2. On-board vehicle electrical system according to Claim 1, **characterized in that** the connecting means (5) is arranged in parallel with the circuit breaker element (2), the connecting means restoring the electrical connection between the starter (S) and the starter battery (1).

3. On-board vehicle electrical system according to Claim 1, in which in addition an on-board vehicle electrical system battery (4) for supplying on-board vehicle electrical system loads which can be connected in parallel with the starter battery (1) is provided, **characterized in that** if the starter circuit is disconnected owing to the circuit breaker element (2) responding, the connecting means (5) brings about the electrical connection between the starter (S) and on-board vehicle electrical system battery (4).

4. On-board vehicle electrical system according to Claim 1, **characterized in that** the connecting means is a power circuit-breaker (5).

5. On-board vehicle electrical system according to Claim 1, **characterized in that** the power circuit-breaker is arranged integrated with the circuit breaker element (2) on the starter battery (1).

6. On-board vehicle electrical system according to one of the preceding claims, **characterized in that** the circuit-breaker element (2) is arranged in the earth line of the starter battery (1).

7. On-board vehicle electrical system according to Claim 3, **characterized in that** a further detector device which interacts with the connecting means (5) and has the purpose of monitoring the on-board vehicle electrical system connecting line for a short-circuit is provided in the on-board vehicle electrical system connecting line between the on-board vehicle electrical system battery (4) and connecting means (5).

8. Use of a device according to one of the preceding claims as an emergency voltage supply for the starter (S) after the crash sensor responds.

## Revendications

1. Réseau de bord pour véhicules comprenant un alternateur (G), un démarreur (S), une batterie de démarrage (1) et un élément d'interruption (2) disposé dans un circuit électrique comprenant la batterie de démarrage (1) et le démarreur (S), commandé par un capteur de collision et pouvant interrompre de manière irréversible la connexion électrique, **caractérisé en ce qu'**il est prévu un moyen de connexion électrique (5) qui peut être commandé par un dispositif de détection (3) surveillant le circuit du démarreur en vue d'y détecter un court-circuit de telle manière qu'après une interruption du circuit du démarreur suite à un déclenchement de l'élément d'interruption (2), une liaison électrique du démarreur (S) avec une batterie dans le réseau de bord peut être établie par le biais du moyen de connexion (5) en cas d'absence de court-circuit dans le circuit du démarreur.

2. Réseau de bord selon la revendication 1, **caractérisé en ce que** le moyen de connexion (5) est disposé parallèlement avec l'élément d'interruption (2), le moyen de connexion rétablissant la liaison électrique entre le démarreur (S) et la batterie de démarrage (1).

3. Réseau de bord pour véhicules selon la revendication 1, avec lequel il est prévu en plus une batterie de réseau de bord (1) pour alimenter les appareillages du réseau de bord, laquelle peut être branchée en parallèle avec la batterie de démarrage (1), **caractérisé en ce que** le moyen de connexion (5), en cas d'interruption du circuit de démarrage suite au déclenchement de l'élément d'interruption (2), rétablit la liaison électrique entre le démarreur (S) et la batterie du réseau de bord (4).

4. Réseau de bord pour véhicules selon la revendication 1, **caractérisé en ce que** le moyen de connexion est un commutateur de puissance (5).

5. Réseau de bord pour véhicules selon la revendication 1, **caractérisé en ce que** le commutateur de puissance est disposé sur la batterie de démarrage (1) en étant intégré avec l'élément d'interruption (2).

6. Réseau de bord selon l'une des revendications précédentes, **caractérisé en ce que** l'élément d'interruption (2) est disposé dans la ligne de masse de la batterie de démarrage (1).

7. Réseau de bord pour véhicules selon la revendication 3, **caractérisé en ce qu'**un dispositif de détection supplémentaire ayant une action combinée avec le moyen de connexion (5) est prévu dans la ligne de liaison du réseau de bord entre la batterie du réseau de bord (4) et le moyen de connexion (5) pour surveiller la ligne de liaison du réseau de bord en vue d'un éventuel court-circuit.

8. Utilisation d'un dispositif selon l'une des revendications précédentes en tant qu'alimentation électrique de secours du démarreur (S) après le déclenchement du capteur de collision.
